# EUROPEAN PATENT SPECIFICATION

(11) **EP 1 270 302 B1**
(45) Date of publication and mention of the grant of the patent: **17.05.2006**
(21) Application number: 02013945.7
(22) Date of filing: 24.06.2002
(51) Int. Cl.: B60K 6/04, H02K 7/18, B62M 23/02, F16D 43/18, B60K 7/00, B60K 6/02

(54) **Energy recovery mechanism in a scooter**
Energierückgewinnungsvorrichtung für einen Motorroller
Dispositif de récuparation d'énergie pour scooter

(30) Priority: 26.06.2001 JP 2001193295; 13.06.2002 JP 2002172725
(43) Date of publication of application: 02.01.2003
(73) Proprietor: Hidaka Engineering Co., Ltd., Fujinomiya-shi, Shizuoka-ken, 418-0001 (JP)
(72) Inventor: Hidaka, Yoshiaki, Fujinomiya-shi, Shizuoka-ken 418-0001 (JP)
(74) Representative: Kern, Ralf M.

(56) References cited:
- EP-A- 0 445 873
- WO-A-00/58121
- US-A- 5 101 924
- US-A- 5 501 292
- US-A- 5 552 988
- US-A- 6 158 543
- PATENT ABSTRACTS OF JAPAN vol. 1996, no. 11, 29 November 1996 (1996-11-29) & JP 08 175476 A (YAMAHA MOTOR CO LTD), 9 July 1996 (1996-07-09)

## Description

### BACKGROUND OF THE INVENTION

The present invention relates to an energy recovery mechanism which in suitable for a vehicle engine equipped with a V-belt continuously-variable-transmission (CVT) type mechanism employed in, for example, scooters or the like.

EP 0 445 873 A1 shows a hybrid propulsion system for vehicles, including an energy recover mechanism for a vehicle engine according to the preamble of claim 1, in which a first propulsion unit of intemal combustion type transmits motion to at least one wheel of the vehicle via transmission members including at least one clutch and a second propulsion unit of electrical type is connected to the driven element of said clutch via means such that the motion generated by one of said propulsion units when the other is deactivated is transmitted only to the transmission members located downstream of said clutch.

### SUMMARY OF THE INVENTION

Among recent vehicles, a so-called hybrid vehicle equipped with an auxiliary power supply motor in addition to a gasoline engine is receiving attention in view of achieving improvement of fuel consumption and reduction of exhaust gas emission. Application of such an idea of a hybrid vehicle to a motorcycle such as a scooter or the like can be considered.

To realize the hybrid vehicle as described above, the whole vehicle needs to be improved. However, as to a vehicle such as, for example, a scooter or the like, of which appeal is a low price, it is desirable that the aforementioned hybrid vehicle is realized while restricting a cost increase where possible.

The present invention has been accomplished in consideration to the above situation. Accordingly, an object of the present invention is to provide an energy recovery mechanism in a vehicle engine with which fuel consumption can be improved and exhaust gas emission can be reduced as described above while restricting a cost increase where possible.

In the prior art there is provided an energy recovery mechanism in a vehicle engine in which an engine output is transmitted to a driving wheel via a power transmission mechanism housed in a transmission case, wherein a driving/generating motor capable of transmitting a driving force to the driving wheel and generating power by rotation of the driving wheel is disposed between an outer surface of a rotating member of the power transmission mechanism and an inner surface of the transmission case.

The invention is defined by attached claims 1-5. In the invention the energy recovery mechanism is characterized in that the power transmission mechanism is equipped with a centrifugal clutch, and the driving/generating motor is disposed between an outer surface of the rotating member of the centrifugal clutch and an inner surface of a centrifugal clutch housing portion of the transmission case.

In a first aspect of the invention, the energy recovery mechanism is further characterised in that the driving/generating motor includes a rotor, which is disposed on an outer peripheral surface of a clutch outer member of the centrifugal clutch, and a stator, which is disposed on the inner peripheral surface of the centrifugal clutch housing portion so as to be opposed to the rotor and to which a coil is wound

In a second aspect of the invention, the energy recovery mechanism is further characterized in that a cooling blade, which sucks air from outside of the transmission case and generates an air flow passing through the driving/generating motor, is formed on a driven side pulley disposed so as to be adjacent to the centrifugal clutch.

In a third aspect of the invention, the energy recovery mechanism is further characterized in that a cooling blade, which sucks air from outside of the transmission case and generates an air flow passing through the driving/generating motor, is formed on a side surface of the clutch outer member.

In a fourth aspect of the invention, the energy recovery mechanism is further characterized in that radiating fins are formed on the outer surface of the centrifugal clutch housing portion of the transmission case.

According to the invention, since a driving/generating motor is disposed between the outer peripheral surface of the centrifugal clutch and the inner surface of the centrifugal clutch housing portion of the transmission case, the driving/generating motor can be disposed without a large-scale remodeling by utilizing a centrifugal clutch and a centrifugal clutch housing portion which are conventionally included, auxiliary power can be supplied for a high load, and generated energy can be recovered for deceleration.

Furthermore, according to the first aspect of the invention, since the driving/generating motor includes a rotor, which is disposed on the outer peripheral surface of the clutch outer member of the centrifugal clutch, and a stator, which is disposed on the inner peripheral surface of the centrifugal, clutch housing portion so as to be opposed to the rotor and to which a coil is wound, the capacity of the driving/generating motor can be increased by utilizing a centrifugal clutch and its housing portion which are conventionally included, auxiliary power can be supplied for a high load, and generated energy can be efficiently recovered for deceleration.

According to second and third aspects of the invention, since a cooling blade is formed on the side surface of the driven side pulley or the clutch outer member, the driving/generating motor can be cooled by air taken in from outside, and thereby can be prevented from overheating.

According to fourth aspect of the invention, radiating fins are formed on the outer wall surface of the centrifugal clutch housing portion, heat generated by operations of the driving/generating motor can be reliably radiated, and hence the driving/generating motor can be prevented from overheating. At this time, when the cooling blade is also used, the cooling blade can be made smaller, and hence mechanical loss can be reduced.

### BRIEF DESCRIPTION OF THE DRAWINGS

Fig. 1 is a system block diagram showing an energy recovery mechanism in an engine unit according to the first embodiment of the invention;
Fig. 2 is a plan view showing the engine unit;
Fig. 3 is a cross-sectional plan view showing a substantial portion of the engine unit, and
Fig. 4 is a cross-sectional plan view showing a substantial portion of an energy recovery mechanism according to another embodiment the invention.
Fig. 5 is a system block diagram showing an energy recovery mechanism in an engine unit according to the second embodiment of the invention;
Fig. 6 is a plan view showing the engine unit;

### DETAILED DESCRIPTION OF THE PREFERRED EMBODIMENTS

Hereinafter, embodiments of the present invention are described with reference to the accompanying drawings.

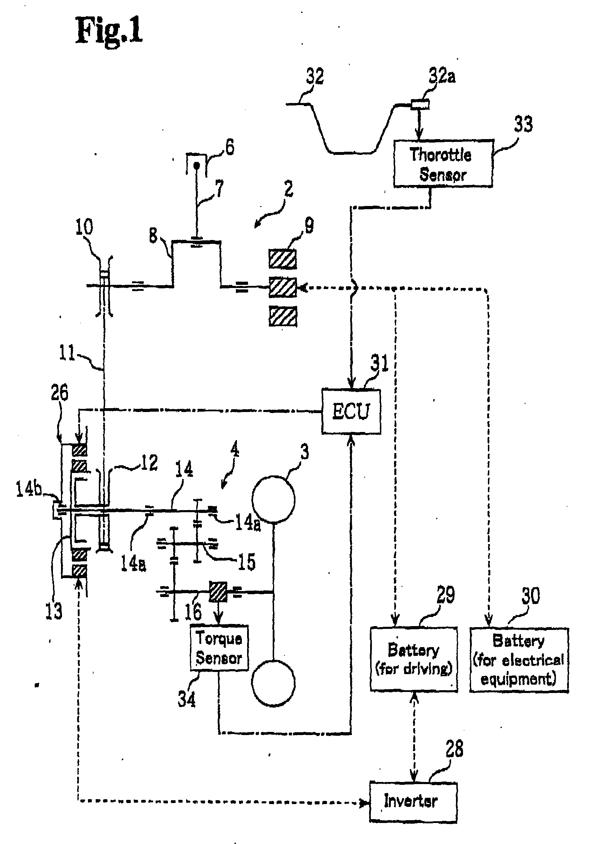

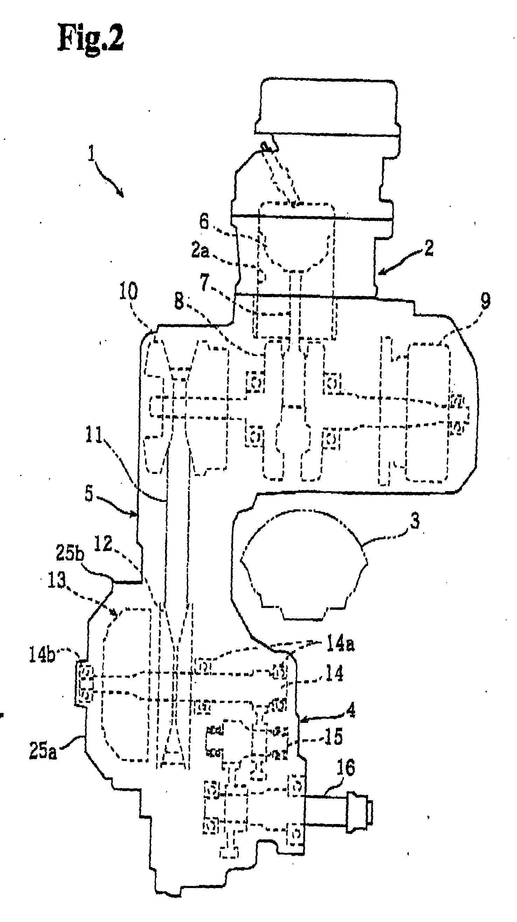

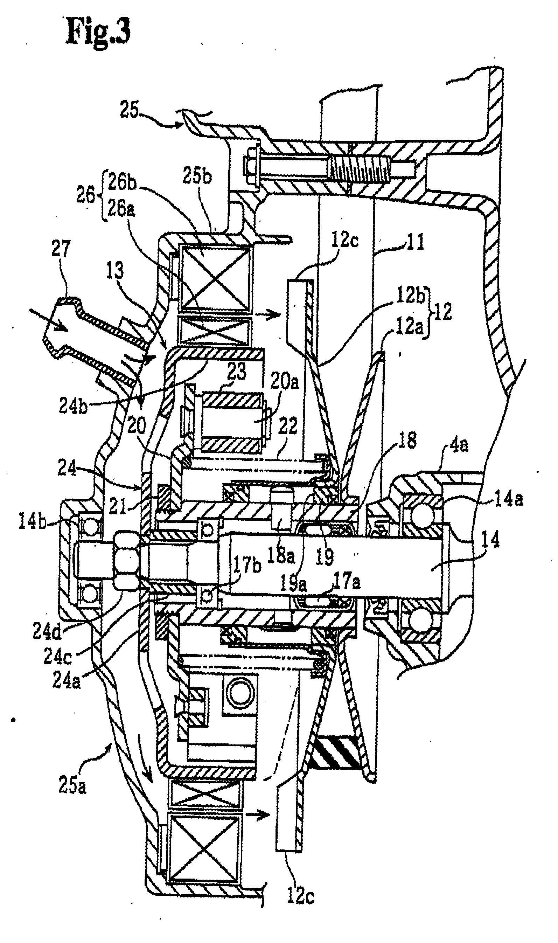

Figs. 1 to 3 are views for explaining an energy recovery mechanism in an engine unit of a scooter according to the first embodiment of the invention. Fig. 1 is a system block diagram. Fig. 2 is a plan view showing the engine unit. Fig. 3 is a cross-sectional plan view showing its substantial portion.

In the figures, reference numeral 1 denotes an engine unit mounted on a body frame so as to be vertically swingable. This engine unit has an engine main body 2, a deceleration drive mechanism 4 for supporting and driving a rear wheel 3 and a CVT-type power transmission mechanism 5 for transmitting an output of the engine main body 2 to the deceleration drive mechanism 4.

This engine main body 2 is of a water cooled four cycle single cylinder type, and has a general structure wherein a piston 6 slidably inserted and disposed in a cylinder bore 2a is connected to a crankshaft 8 with a conrod 7.

A flywheel magneto generator 9 is attached to the right end of the crankshaft 8 and rotation of a starter motor (not shown) can be transmitted to the crankshaft. A driving side pulley 10 of the power transmission mechanism 5 is attached to the left end of the crankshaft 8. The driving side pulley 10 is connected to a driven side pulley 12 with a V belt 11.

The driven side pulley 12 is connected to a driving shaft 14 of the deceleration drive mechanism 4 via an automatic centrifugal clutch 13. This driving shaft 14 is connected to a rear wheel shaft 16 via an intermediate shaft 15, and the aforementioned rear wheel 3 is fixed to the rear wheel shaft 16. Here, the driving shaft 14 is pivotally supported by a casing 4a of the deceleration drive mechanism 4 at two sites on the right side via bearings 14a, 14a, and its left-side end portion is pivotally supported by a centrifugal clutch housing unit 25a described later via a bearing 14b. The automatic centrifugal clutch 13 is supported by the bearing portions 14b, 14a of the driving shaft 14.

The driven side pulley 12 is constituted by a fixed side pulley half portion 12a fixed to the right end (as viewed in the figure) of a driving cylinder 18 rotatably supported by the driving shaft 14 via a needle bearing 17a and a ball bearing 17b and a moving side pulley half portion 12b fixed to the right end of a slider 19 (as viewed in the figure) slidably attached to the driving cylinder 18 in a shaft direction.

Reference numeral 18a is a torque cam fixed to the driving cylinder 18, and an upper protrusion of the torque cam 18a is slidably engaged with a torque groove 19a. diagonally formed in the slider 19. When a travel load is increased, the moving side pulley half portion 12b is slid rightward, as viewed in the figure, by co-operation of the torque cam 18a and the torque groove 19a and an effective diameter of the driven side pulley 12 is increased, thereby increasing a driving force.

Furthermore, an inner plate 20, which is a driving side member of the automatic centrifugal clutch 13, is spline-coupled to the left end portion (as viewed in the figure) of the driving cylinder 18 and fastened with a nut 21. Furthermore, in the outer peripheral portion of the inner plate 20, a weight 23 is swingably supported by a support pin 20a planted in a horizontal direction in the portion. An energizing spring 22 is disposed between this inner plate 20 and the moving side pulley half portion 12b, and the moving side pulley half portion 12b is energized thereby in a direction in which the effective diameter of the pulley is increased.

Furthermore, a clutch outer member 24, which is a driven side member of the automatic centrifugal clutch 13, is attached to a portion of the driving shaft 14 on the left side of the driving cylinder 18. This clutch outer member 24 forms a generally plate-like shape, wherein a peripheral wall 24b is vertically provided in the outer periphery of a bottom wall 24a. This clutch outer member 24 is fixed to the driving shaft 14 by spline-coupling a boss cylinder 24c fixed to the central portion of the bottom wall 24a to the driving shaft 14 and fixing it with a nut 24d.

Furthermore, the peripheral wall 24b of the clutch outer member 24 is positioned so as to cover the weight 23. when the rotation speed, that is, a centrifugal force of the inner plate 20 is increased, this weight 23 is swung outward with the support pin 20a as the center and brought into contact with the inner surface of the peripheral wall 24b so that rotation of the driven side pulley 12 is transmitted from the inner plate 20 to the driving shaft 14.

Furthermore, a centrifugal clutch housing portion 25a for housing the automatic centrifugal clutch 13 is formed in the transmission case 25 so as to have a generally plate-like shape corresponding to the plate-like clutch outer member 24 and be protruded towards the outside. A peripheral wall 25b of the centrifugal clutch housing portion 25a is positioned so as to surround the peripheral wall 24b of the clutch outer member 24 from the outside.

Furthermore, a driving/generating motor (DC brushless motor) 26 capable of transmitting an auxiliary driving force to the rear wheel 3 and generating power by rotation of the rear wheel 3 upon deceleration is disposed between the outer surface of the peripheral wall 24b of the clutch outer member 24 and the inner surface of the peripheral wall 25b of the centrifugal clutch housing unit 25a. This driving/generating motor 26 includes a rotor (permanent magnet) 26a, which is fixed on the outer surface of the peripheral wall 24b of the clutch outer member 24, and a stator 26b, which is disposed on the inner surface of the peripheral wall 25b of the centrifugal clutch housing unit 25a so as to be opposed to the rotor 26a and to which a coil is wound.

Furthermore, a cooling blade 12c, which sucks air from outside via a suction pipe 27 planted in the clutch housing portion 25a and generates an air flow in the clutch housing portion 25a, is formed in a wall surface outer peripheral portion of the moving side pulley half portion 12b of the driven side pulley 12 on the side of the centrifugal clutch 13. It is not shown, but the suction pipe 27 is connected to a secondary side of an air cleaner with a suction hose.

The driving/generating motor 26 is connected to a battery 29 for driving via an inverter 28 for AC/DC conversion. This battery 29 for driving is also connected to a generator 9 on the engine side. Furthermore, the generator 9 is connected to a battery 30 for electrical equipment.

Furthermore, reference numeral 31 denotes an ECU for controlling a drive of the driving/generating motor 26. A detection signal from a throttle sensor 33 for detecting a twisting of a throttle grip 32a of a steering handle bar 32 and a detection signal from a torque sensor 34 for detecting a driving torque in the rear wheel shaft 16 are inputted, and the ECU 31 controls generation of auxiliary power by the driving/generating motor 26 based on these detection signals.

For example, in an operation state such as upon full opening, acceleration, climbing and so forth, where a travel load of a vehicle is high, power is supplied to the driving/generating motor 26 from the battery 29, and the torque of the motor 26 is transmitted from the driving shaft 14 to the rear wheel shaft 16 via the intermediate shaft 15. Meanwhile, deceleration energy and regeneration energy upon deceleration and braking are absorbed by the driving/generating motor 26.

Specifically, in the above operating area with a large travel load, the ECU 31 obtains a throttle opening and a throttle opening speed from the detection signal from the throttle sensor 33 and calculates a required driving torque therefrom. Meanwhile, a generated driving torque which is generated in reality is obtained from a detection signal from the torque sensor 34, the feeding amount to the driving/generating motor 26 is calculated based on the required and generated driving torques, and a driving torque (auxiliary power) necessary for the motor 26 is generated.

Furthermore, rotation of the clutch outer member 24 of the centrifugal clutch 13 is driven by rotation of the rear wheel 3 upon deceleration, and the driving/generating motor 26 generates power by this rotation, and the generated power charges the battery 29 for driving via the inverter 28.

Here, since the clutch outer member 24 of the automatic centrifugal clutch 13 has a structure that the weight 23 disposed inside is swung outward by a centrifugal force and brought into contact with its inner surface to transmit the torque, the clutch outer member 24 inevitably needs to have a relatively large diameter. In this embodiment, a rotor 26a is disposed and fixed to the outer peripheral surface of the clutch outer member 24 having such a large diameter, and a stator 26b is disposed and fixed to the inner surface of the peripheral wall 25b of the clutch housing unit 25a formed so as to surround the outside of the clutch outer member 24, the rotor 26a and the stator 26b can have a large diameter. Energy can be efficiently recovered upon deceleration and large auxiliary power can be generated when a travel load is high.

Furthermore, since a cooling blade 12c, which sucks air from outside into the clutch housing portion 25a and generates an air flow passing through the driving/generating motor 26 in the housing portion 25a, is formed on the side surface of the moving side pulley half portion 12b of the driven side pulley 12, heat generated by operations of the driving/generating motor 26 can be released outside the clutch housing portion 25a, and hence the driving/generating motor 26 can be prevented from overheating.

Furthermore, in this embodiment, since the driving/generating motor 26 is disposed by utilizing an outer peripheral surface of a peripheral wall 24b of a clutch outer member 24 and an inner peripheral surface of a peripheral wall 25b of a centrifugal clutch housing portion 25a included in a conventional engine unit of a scooter, the motor 26 can be included with a little remodeling of the conventional engine unit, and a required configuration space is hardly increased. Furthermore, since the end portion of the driving shaft 14 is supported by a bearing 14b, support rigidity can be increased in comparison to the case where a centrifugal clutch 13 is supported by an overhang portion of the driving shaft 14.

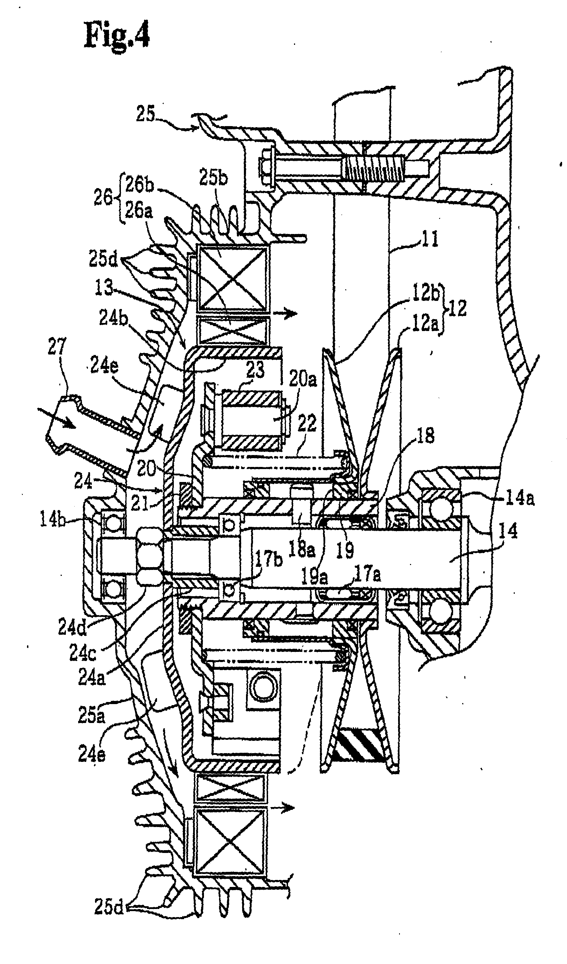

In the above embodiment, the cooling blade 12c is formed on the driven side pulley 12, but the position at which this cooling blade is formed is not limited to this position. For example, as shown in Fig. 4, the cooling blade 24e can be formed on the bottom wall 24a of the clutch outer member 24.

Furthermore, when the driving/generating motor 26 is constituted by a DC brushless motor as described above, heat is generated from the side of the stator 26b, to which the coil is wound. Therefore, it is effective to form radiating fins 25d integrally on a portion of the centrifugal clutch housing portion 25b which surrounds the stator 26b as shown in Fig. 4. In this case, heat from the stator 26b can be efficiently radiated outside. As a result, the cooling blade 12c can be made smaller, and mechanical loss can be reduced.

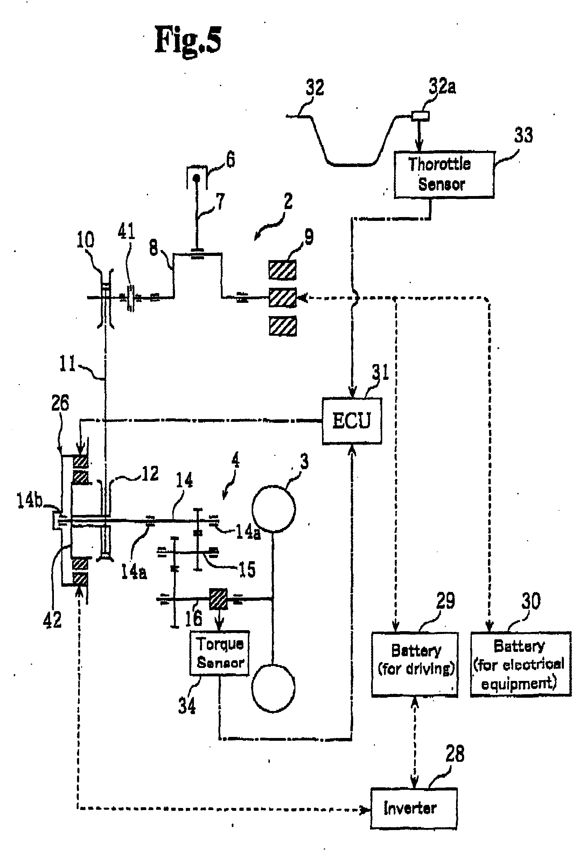

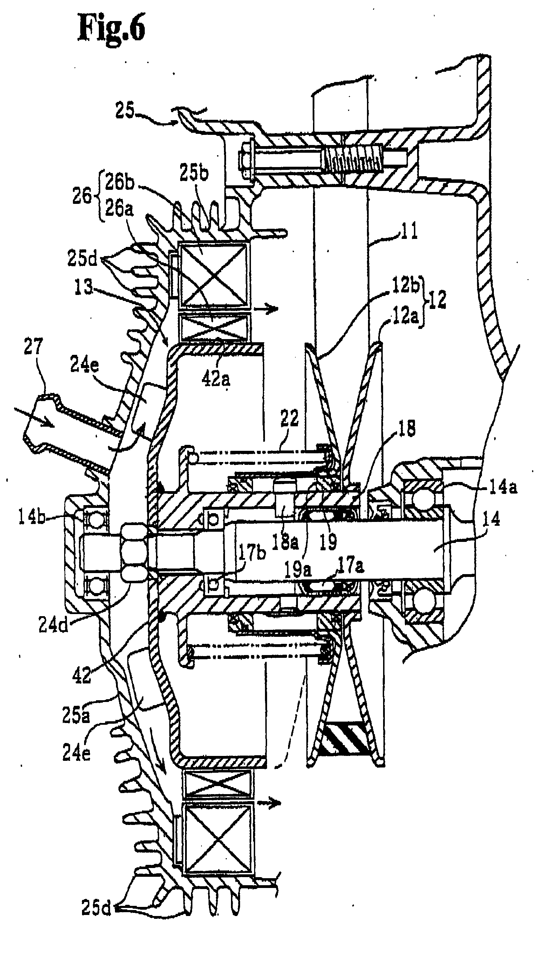

Figs. 5 and 6 are views for explaining a second arrangement where the same reference numerals as in Figs. 1 to 4 designate the same or equivalent component parts.

In this arrangement, a clutch mechanism 41 is provided on the driving side pulley 10 side, while the centrifugal clutch 13 on the driven side pulley 12 side is eliminated. A rotating member 42 similar in shape to the clutch outer member 24 is fixed to the driving cylinder 18 of the driven side pulley 12, and the driving/generating motor 26 is disposed between the outer surface 42a of the rotating member 42 and a rotating member housing portion 25a of the transmission case 25.

In this arrangement, auxiliary power can be supplied for high load, and generated energy can be recovered for deceleration.

The driving/generating motor 26 is disposed outside the driven side pulley 12 in the shaft direction in this arrangement. However, the driving/generating motor 26 may also be disposed inside the driven side pulley 12 in the shaft direction.

## Claims

1. An energy recovery mechanism (1) for a vehicle engine in which an engine output is transmitted to a driving wheel via a power transmission mechanism (5) housed in a transmission case (25), comprising a driving/generating motor (26) capable of transmitting a driving force to the driving wheel and generating power by rotation of the driving wheel,
**characterized in that**
said power transmission mechanism (5) is equipped with a centrifugal clutch (13), and
said driving/generating motor (26) is disposed between an outer peripheral surface (24b) of the rotating member of the centrifugal clutch (13) and an inner surface (25b) of a centrifugal clutch housing portion (25a) of the transmission case (25).

2. The energy recovery mechanism for a vehicle engine according to claim 1, wherein the driving/generating motor (26) includes a rotor (26a), which is disposed on an outer peripheral surface (24b) of a clutch outer member (24) of the centrifugal clutch (13), and a stator (26b), which is disposed on the inner peripheral surface (25b) of the centrifugal clutch housing portion (25a) of the transmission case (25) so as to be opposed to the rotor (26a) and to which a coil is wound.

3. The energy recovery mechanism for a vehicle engine according to claim 2, wherein a cooling blade (12c), which sucks air from outside of the transmission case (25) and generates an air flow passing through the driving/generating motor (26), is formed on a driven side pulley disposed so as to be adjacent to the centrifugal clutch (13).

4. The energy recovery mechanism for a vehicle engine according to claim 2, wherein a cooling blade (12c), which sucks air from outside of the transmission case (25) and generates an air low passing through the driving/generating motor (26), is formed on a side surface of the clutch outer member (24).

5. The energy recovery mechanism for a vehicle engine according to any one of claims 2 - 4, wherein radiating fins (25d) are formed on the outer surface of the centrifugal clutch housing portion (25a) of the transmission case (25).

## Patentansprüche

1. Energierückgewinnungsvorrichtung (1) für einen Fahrzeugmotor, bei dem eine Motorausgangsleistung an ein Antriebsrad über eine Kraftübertragungsvorrichtung (5) übertragen wird, die in einem Kraftübertragungsgehäuse (25) untergebracht ist, wobei ein Antriebs-/Generator-Motor (26) vorgesehen ist, der in der Lage ist, eine Antriebskraft auf das Antriebsrad zu übertragen und eine Antriebskraft durch Drehung des Antriebsrades zu erzeugen,
**dadurch gekennzeichnet, dass**
die Kraftübertragungsvorrichtung (5) mit einer Zentrifugalkupplung (13) ausgerüstet ist, und dass
der Antriebs-/Generator-Motor (26) zwischen einer äußeren Umfangsfläche (24b) des rotierenden Teiles der Zentrifugalkupplung (13) und einer inneren Umfangsfläche (25b) eines Zentrifugalkupplungs-Gehäuseabschittes (25a) des Kraftübertragungsgehäuses (25) angeordnet ist.

2. Energierückgewinnungsvorrichtung für einen Fahrzeugmotor entsprechend Anspruch 1, worin der Antriebs-/Generator-Motor (26) einen Rotor (26a), der auf einer äußeren Umfangsfläche (24b) eines äußeren Kupplungsteiles (24) der Zentrifugalkupplung (13) angeordnet ist, einen Stator (26b) umfasst, der auf der inneren Umfangsfläche (25b) des Zentrifugalkupplungs-Gehäuseabschnittes (25a) des Kraftübertragungsgehäuses (25) angeordnet ist, so dass er dem Rotor (26a) gegenüberliegend angeordnet ist, und auf dem eine Spule gewickelt ist.

3. Energierückgewinnungsvorrichtung für einen Fahrzeugmotor entsprechend Anspruch 2, worin eine Kühlschaufel (12c), die Luft von außerhalb des Kraftübertragungsgehäuses (25) ansaugt und einen Luftstrom erzeugt, der durch den Antriebs-/Generator-Motor (26) hindurchtritt, auf einer angetriebenen Seite der Antriebsscheibe ausgebildet ist, die so angeordnet ist, dass sie neben der Zentrifugalkupplung (13) liegt.

4. Energierückgewinnungsvorrichtung für einen Fahrzeugmotor entsprechend Anspruch 2, worin eine Kühlschaufel (12c), die Luft von außerhalb des Kraftübertragungsgehäuses (25) ansaugt und einen Luftstrom erzeugt, der durch den Antriebs-/Generator-Motor (26) hidurchtritt, auf einer Seitenfläche des äußeren Kupplungsteiles (24) ausgebildet ist.

5. Energierückgewinnungsvorrichtung für einen Fahrzeugmotor nach einem der Ansprüche 2 bis 4, worin Abstrahlungsrippen (25d) auf der Außenfläche des Zentrifugalkupplungs-Gehäuseabschnittes (25a) des Kraftübertragungsgehäuses (25) ausgebildet sind.

## Revendications

1. Dispositif de récupération d'énergie (1) pour un moteur de véhicule dans lequel une sortie du moteur est transmise vers une roue d'actionnement par un mécanisme de transmission (5) logé dans le carter de la boîte de vitesse (25), comprenant un moteur d'actionnement/de génération (26) capable de transmettre une force d'actionnement à la roue d'actionnement et de générer une force par la rotation de la roue d'actionnement, **caractérisé en ce que**
- ledit mécanisme de transmission (5) est équipé avec un embrayage centrifuge (13), et
- ledit moteur d'actionnement/de génération (26) est disposé entre une surface périphérique extérieure (24b) de la pièce de rotation de l'embrayage centrifuge (13) et une surface intérieure (25b) d'une portion de boîtier de l'embrayage centrifuge (25a) du carter de la boîte de vitesse (25).

2. Dispositif de récupération d'énergie (1) pour un moteur de véhicule selon la revendication 1, où le moteur d'actionnement / de génération (26) comprend un rotor (26a), qui est disposé sur une surface périphérique extérieure (24b) d'une pièce extérieure d'embrayage (24) de l'embrayage centrifuge (13), et un stator (26b), qui est disposé sur la surface périphérique intérieure (25b) de la portion de boîtier de l'embrayage centrifuge (25a) du carter de la boîte de vitesse (25) pour être opposé au rotor (26a) et auquel est enroulée une bobine.

3. Dispositif de récupération d'énergie (1) pour un moteur de véhicule selon la revendication 2, où une palette de refroidissement (12c) qui aspire l'air de l'extérieur du carter de la boîte de vitesse (25) et génère un courant d'air passant par le moteur d'actionnement / de génération (26), est formée sur une roue de courroie latérale entraînée disposée pour être adjacente à l'embrayage centrifuge (13).

4. Dispositif de récupération d'énergie (1) pour un moteur de véhicule selon la revendication 2, où une palette de refroidissement (12c) qui aspire l'air de l'extérieur du carter de la boîte de vitesse (25) et génère un courant d'air passant par le moteur d'actionnement / de génération (26), est formée sur une surface latérale de la pièce extérieure d'embrayage (24).

5. Dispositif de récupération d'énergie (1) pour un moteur de véhicule selon l'une quelconque des revendications 2 - 4, où les ailettes de radiation (25d) sont formées sur la surface extérieure de la portion de boîtier de l'embrayage centrifuge (25a) du carter de la boîte de vitesse (25).
